# EUROPEAN PATENT SPECIFICATION

(11) **EP 4 522 487 B1**
(45) Date of publication and mention of the grant of the patent: **08.07.2026**
(21) Application number: 23733621.9
(22) Date of filing: 05.05.2023
(51) Int. Cl.: B62D 6/00, B62D 6/02, B62D 7/14, B62D 15/02, B62D 1/00, B60W 30/06, B62D 7/15

(54) **CONTROL SYSTEM AND METHOD FOR VEHICLE STEERING**
STEUERUNGSSYSTEM UND -VERFAHREN ZUR FAHRZEUGLENKUNG
SYSTÈME DE COMMANDE ET PROCÉDÉ POUR DIRECTION DE VÉHICULE

(30) Priority: 09.05.2022 GB 202206753
(43) Date of publication of application: 19.03.2025
(73) Proprietor: Jaguar Land Rover Limited, Coventry, Warwickshire CV3 4LF (GB)
(72) Inventor: SONI, Bhavika, Coventry Warwickshire CV3 4LF (GB); TYRRELL, Samuel, Coventry Warwickshire CV3 4LF (GB); ADCOCK, Lee, Coventry Warwickshire CV3 4LF (GB)
(74) Representative: Jaguar Land Rover Patents Department
(86) International application number: PCT/EP2023/061996
(87) International publication number: WO 2023/217663

(56) References cited:
- JP-A- 2005 092 264
- JP-A- H03 287 469
- US-B2- 8 983 728

## Description

### TECHNICAL FIELD

The present disclosure relates to a control system and method for vehicle steering. Aspects of the invention relate to a control system, a method of controlling vehicle steering, a computer program and a vehicle.

### BACKGROUND

It is known to provide vehicles with rear wheel steering in addition to the usual front wheel steering. This may provide improved agility. When the vehicle is stationary it is undesirable for the rear wheels to be turned (steered), since the rear wheel steering system may not be rated for continuous use in this state.

It is an aim of the present invention to address one or more of the disadvantages associated with the prior art.

JPH03287469A relates to a four-wheel steering control device in which the steering angle of the front wheels and the rear wheels is detected by the steering angle detecting means.

### SUMMARY OF THE INVENTION

Aspects and embodiments of the invention provide a control system, a method of controlling vehicle steering, a computer program and a vehicle, as claimed in the appended claims.

In one aspect, there is provided a control system for a vehicle, the control system comprising one or more controllers, the control system configured to:
receive an indication of current vehicle speed;
monitor a time period since vehicle launch; and
limit a maximum steering rate of a steering system of the vehicle in dependence on the current vehicle speed and a period of time since launch
wherein the one or more controller is configured, following the expiry of a predetermined time period following launch of the vehicle, to limit a maximum steering rate of a steering system of the vehicle to a first steering rate limit while the vehicle is travelling below a predetermined speed threshold, and to not limit the maximum steering rate to the first steering rate while the vehicle is travelling above the predetermined speed threshold.

In this way, by controlling the limiting of the maximum steering rate in dependence not only on vehicle speed but also on a time since launch, it is possible to permit a greater steering limit (or no directly imposed limit beyond the mechanical capability of the rear wheel steering system) to be used immediately upon launch of the vehicle (and a short period thereafter), providing the vehicle with greater agility as it pulls away, and making the handling of the vehicle (and in particular the steering thereof) feel more responsive to the driver. The increased noise, vibration and harshness (NVH) is seen as an acceptable compromise during this initial time window following launch.

Preferably, the one or more controllers collectively comprise:
at least one electronic processor having an electrical input for receiving the indication of current vehicle speed; and
at least one memory device electrically coupled to the at least one electronic processor and having instructions stored therein;
and wherein the at least one electronic processor is configured to monitor a time period since vehicle launch, and limit a maximum steering rate of a steering system of the vehicle in dependence on the current vehicle speed and a period of time since launch.

The controller is preferably configured to limit a maximum steering rate of a steering system of the vehicle while the vehicle is travelling below a predetermined speed threshold. This serves to minimise, or at least reduce, NVH while the vehicle is travelling at low, "quiet", speeds. During the initial period following launch though, this maximum steering rate is overridden, for example by using a higher maximum steering rate for the initial period.

For example, the controller may be configured to use a first steering rate limit when the vehicle is travelling below the predetermined vehicle speed threshold following the expiry of a predetermined time period following launch of the vehicle. During the predetermined time period following launch of the vehicle (and assuming the vehicle is still below the predetermined vehicle speed threshold), a second steering rate limit which is higher than the first steering rate limit is applied. Alternatively, during the predetermined time period following launch of the vehicle, no steering rate limit may be applied.

The predetermined time period may be vehicle specific, but is preferably between 1 second and 5 seconds, and preferably approximately 2 seconds. This keeps the period of time during which NVH may be at an increased level small, but is long enough for the vehicle to pull away while making use of rear wheel steering.

The first steering rate limit may be between 10 mm/s and 15 mm/s. The second (higher) steering rate may be between 20 mm/s and 30 mm/s.

In some implementations, a maximum steering rate below the predetermined vehicle speed may be dependent on a current driving mode of the vehicle. For example, in an off-road driving mode a higher steering rate limit (or none) may be used, since NVH issues are less relevant, whereas in a comfort mode a lower steering rate limit may be used due to NVH reduction being paramount.

The steering system is preferably a rear wheel steering system of the vehicle.

In another aspect, there is provided a vehicle comprising a steering system and a control system according to the above paragraphs.

In addition to the rear wheel steering system, the vehicle further comprises a front wheel steering system. Preferably, the control system is configured to limit the maximum steering rate of the rear wheel steering system in dependent on vehicle speed and time since launch, but not to so limit the front wheel steering system.

In another aspect, there is provided a control method for steering a vehicle, the method comprising:
receiving an indication of current vehicle speed;
monitoring a time period since vehicle launch; and
limiting a maximum steering rate of a steering system of the vehicle in dependence on the current vehicle speed and a period of time since launch
wherein, following the expiry of a predetermined time period following launch of the vehicle, a maximum steering rate of a steering system of the vehicle is limited to a first steering rate limit while the vehicle is travelling below a predetermined speed threshold, and is not limited to the first steering rate while the vehicle is travelling above the predetermined speed threshold.

In another aspect, there is provided computer software that, when executed, is arranged to perform a method according to the above.

Within the disclosure of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

One or more embodiments of the invention will now be described, by way of example only, with reference to the accompanying drawings, in which:
Figure 1 shows a schematic representation of a vehicle having an anti-lock braking system (ABS), front and rear steering systems and a controller;

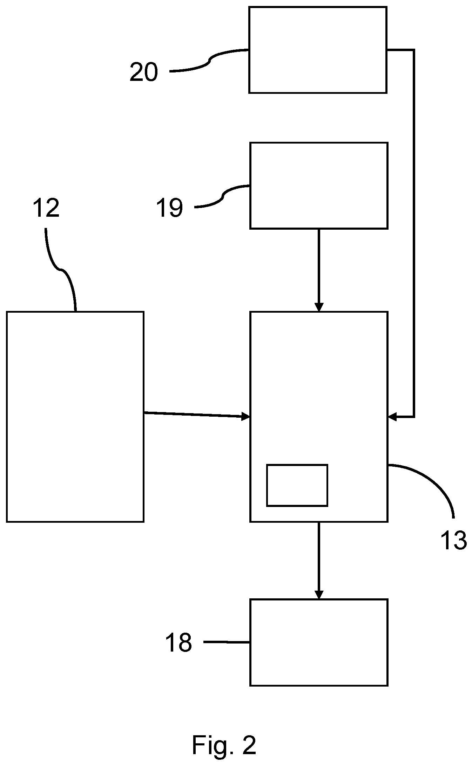

Figure 2 schematically illustrates the rear wheel steering control system and method; and
Figure 3 shows a schematic flow diagram of the control method.

### DETAILED DESCRIPTION

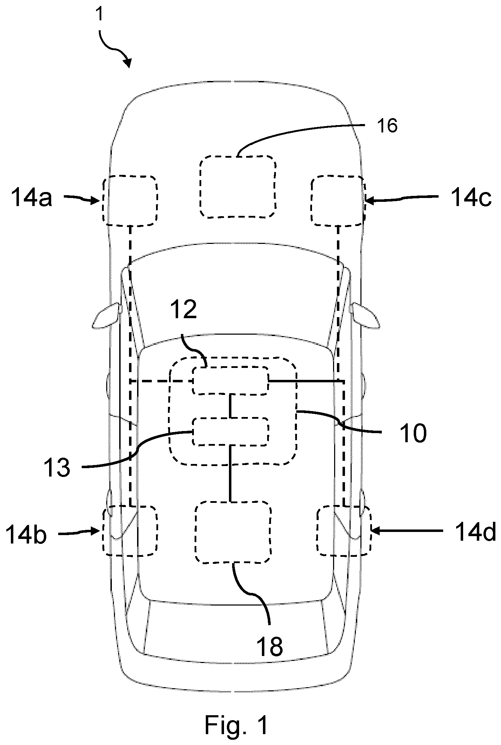

A vehicle 1 in accordance with an embodiment of the present invention is described herein with reference to the accompanying Figure 1. The vehicle 1 comprises respective wheel speed sensors 14a-14d each associated with one of the road wheels (not shown) of the vehicle 1. The wheel speed sensors 14a-14d each output a speed-dependent signal to a control system 10, and in particular to an electronic stability program (ESP) 12 of the control system 10, which includes an anti-lock braking system (ABS) function and other functions relating to stability control of the vehicle. The control system 10 also comprises a rear wheel steering controller 13. In the present case, there are respective wheel speed sensors associated with all four wheels of the vehicle. The wheel speed sensors 14a-14d may be mounted at or proximate the road wheels (for example within a bearing unit of the wheel), or on an axle or drive shaft providing torque to the road wheels. The vehicle 1 also comprises a front wheel steering actuator 16 and a rear wheel steering actuator 18, which actuate the steering mechanisms to affect steering of the front and rear wheels respectively. The rear wheel steering actuator 18 is driven to actuate in accordance with a maximum steering rate which is set in dependence on the current vehicle speed and the time elapsed since vehicle launch, as will be described in detail subsequently. The front wheel steering actuator 16 is not subject to a maximum steering rate limit which is dependent on speed and/or time since launch.

The present technique is concerned with limiting the maximum steering rate which can be applied by the rear wheel steering actuator while the vehicle is travelling at low speeds. In particular, the rear wheel steering controller 13 is configured to limit a maximum steering rate of a steering system of the vehicle while the vehicle is travelling below a predetermined speed threshold. The speed threshold may be calibratable, so as to tailor the speed at which the steering rate is limited to a speed range at which NVH issues can be expected to occur. This limits the steering rate to minimise or at least reduce NVH at low "quiet" speeds, at which NVH would be particularly noticeable. The maximum steering rate is a maximum amount of rack travel of the steering rack permitted per unit time, typically measured in mm/s. The maximum steering rate may be considered more generally to be a maximum amount by which a steering angle can be changed (increased or decreased) per unit time. This is different to a maximum amount of steering angle which can be applied by the steering system - corresponding to "full lock".

It will be appreciated that the vehicle also comprises a front wheel steering system. The front wheel steering system, which is mechanically linked to the steering wheel, does not have the same limitations as the rear wheel steering system, and in particular is not subject to steering rate limits applied at low speeds, at least in part because it is limited by the mechanical linkage to the steering wheel. Moreover, the front wheel steering system is rated for steering at low speeds, and so fewer NVH issues are likely to arise. Accordingly, steering via the front wheel steering system is permitted without applying a steering rate limit based on speed, while a maximum steering rate is applied for the rear wheel steering system.

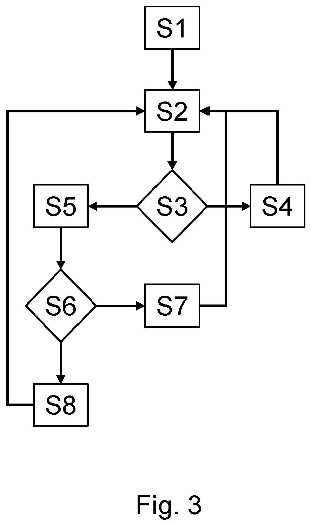

Referring to Figure 3, a schematic block diagram is provided which sets out the vehicle components and signal flows involved in the present technique. The ESP 12 is shown, which outputs to a rear wheel steering controller wheel speeds for the wheels of the vehicle. These can be used to determine a vehicle speed, or alternatively the wheel speeds may be used directly in the control method. A driving mode selector 19 is provided, which is configured to select a driving mode for the vehicle 1. Different driving modes of the vehicle may have different characteristics, such as suspension stiffness, ABS usage, acceleration or braking profiles and the like. The selection of driving mode may be made by the driver manually, or automatically based on vehicle sensor data. The selected driving mode is provided to the rear wheel steering controller 13. A steering module 20 is also provided which generates a steering request based on either a manual driving input (via a steering wheel) or an automated driving input. The steering request is provided to the rear wheel steering controller 13.

The controller is configured to apply different rate limits for a rear wheel steering actuator in dependence on a current vehicle speed, a time elapsed since vehicle launch, and optionally a current driving mode. In particular, the controller is configured to use a first steering rate limit when the vehicle is travelling below the predetermined vehicle speed threshold following the expiry of a predetermined time period following launch of the vehicle (for example after the first x seconds). In contrast, during the predetermined time period following launch of the vehicle (for example for the first x seconds), a second steering rate limit which is higher than the first steering rate limit is applied. In other words, the steering rate limit for reducing NVH is temporarily suppressed for an initial period of time so that the vehicle steering feels responsive to the driver, and to maximise the driver's ability to perform challenging manoeuvres at the outset of vehicle launch. Higher NVH is considered to be a reasonable trade-off for this short initial period. In some cases, during the predetermined time period following launch of the vehicle, no steering rate limit is applied. That is, the steering actuator operates at its maximum capability. Alternatively, a calibrated maximum rate is used. The specific duration of the predetermined time period may be calibratable. The predetermined time period may be between 1 second and 5 seconds, and preferably approximately 2 seconds. This provides a good trade off between driver experience and manoeuvrability on the one hand, and NVH suppression on the other. Similarly, the first and second steering rates may be calibratable. For example, the first steering rate limit may be between 10mm/s and 15mm/s, and the second steering rate limit between 20mm/s and 30mm/s.

In some implementations, the controller is configured to modify the control method in dependence on a current driving mode in which the vehicle is operating. For example, rear wheel steering may not be permitted at all in an on-road "comfort" mode, while it may be permitted in off road modes, such as when driving on mud or sand, or in a rock crawl mode. In these modes rear wheel steering may be permitted subject to certain maximum steering rates at low speeds, as described above. In some implementations, a maximum steering rate below the predetermined vehicle speed may be dependent on a current driving mode of the vehicle. That is, the maximum steering rate value for the initial period may differ between driving modes.

Generally, vehicle controller systems are of a modular nature, both structurally and functionally. It is to be understood that the or each controller within the control system of the present application can comprise a control unit or computational device having one or more electronic processors (e.g., a microprocessor, a microcontroller, an application specific integrated circuit (ASIC), etc.), and may comprise a single control unit or computational device, or alternatively different functions of the or each controller in the control system may be embodied in, or hosted in, different control units or computational devices. As used herein, the term "controller," "control unit," or "computational device" will be understood to include a single controller, control unit, or computational device, and a plurality of controllers, control units, or computational devices collectively operating to provide the required control functionality. A set of instructions could be provided which, when executed, cause the controller to implement the control techniques described herein (including some or all of the functionality required for the method described herein). The set of instructions could be embedded in said one or more electronic processors of the controller; or alternatively, the set of instructions could be provided as software to be executed in the controller. A first controller or control unit may be implemented in software run on one or more processors. One or more other controllers or control units may be implemented in software run on one or more processors, optionally the same one or more processors as the first controller or control unit. Other arrangements are also useful.

Each of the controllers may comprise at least one electronic processor having one or more electrical input(s) for receiving one or more input signal (from one or more of the other controllers), and one or more electrical output(s) for outputting one or more output signal(s) (to one or more of the other controllers). The, or each, electronic processor may comprise any suitable electronic processor (e.g., a microprocessor, a microcontroller, an ASIC, etc.) that is configured to execute electronic instructions. The, or each, electronic memory device may comprise any suitable memory device and may store a variety of data, information, threshold value(s), lookup tables or other data structures, and/or instructions therein or thereon. In an embodiment, the memory device has information and instructions for software, firmware, programs, algorithms, scripts, applications, etc. stored therein or thereon that may govern all or part of the methodology described herein. The processor, or each, electronic processor may access the memory device and execute and/or use that or those instructions and information to carry out or perform some or all of the functionality and methodology described herein.

The at least one memory device may comprise a computer-readable storage medium (e.g. a non-transitory or non-transient storage medium) that may comprise any mechanism for storing information in a form readable by a machine or electronic processors/computational devices, including, without limitation: a magnetic storage medium (e.g. floppy diskette); optical storage medium (e.g. CD-ROM); magneto optical storage medium; read only memory (ROM); random access memory (RAM); erasable programmable memory (e.g. EPROM and EEPROM); flash memory; or electrical or other types of medium for storing such information/instructions.

The or each controller may comprise at least one electronic processor configured to execute electronic instructions stored within at least one memory device, which when executed causes the electronic processor(s) to carry out the method as hereinbefore described. A similar structure may be provided for each controller. However, it will be appreciated that embodiments of the present invention can be realised in any suitable form of hardware, software or a combination of hardware and software. For example, it is contemplated that the present invention is not limited to being implemented by way of programmable processing devices, and that at least some of, and in some embodiments all of, the functionality and or method steps of the present invention may equally be implemented by way of non-programmable hardware, such as by way of non-programmable ASIC, Boolean logic circuitry, etc.

Referring to Figure 4, a schematic flow diagram is provided illustrating one implementation of the method.

At a step S1 the vehicle launches (increases speed from being stationary). The process of Figure 3 is restarted every time the vehicle launches, giving the driver the benefit of rear wheel steering at low speeds for a short period following every launch. At a step S2 the speed of the vehicle and/or the (rear) wheels of the vehicle is monitored. At a step S3 it is determined whether the monitored speed is greater than or less than a predetermined speed threshold. If it is determined that the speed is greater than the predetermined speed threshold then the maximum steering rate of the vehicle is not limited (or takes on a calibratable maximum limit), and the process returns to the step S2. If it is determined that the speed is not greater than the predetermined speed threshold then at a step S5 a time since launch is determined (a counter may have been set at the time of step S1 for example). At a step S6 it is determined whether the time since launch is greater than or less than a predetermined time period. If it is determined that the time since launch is not greater than the predetermined time period then the maximum steering rate of the vehicle is not limited at a step S7, or takes on a maximum limit, or takes on a relatively high limit. The process then returns to the step S2. However, if it is determined that that the time since launch is greater than the predetermined time period then the maximum steering rate of the vehicle is limited (or takes on a relatively low limit) at a step S8. The process then returns to the step S2.

It will be appreciated that various changes and modifications can be made to the present invention within the scope of the appended claims. For example, all of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is defined by the scope of the appended claims. The claims should not be construed to cover merely the foregoing embodiments, but also any embodiments which fall within the scope of the claims.

## Claims

1. A control system (10) for a vehicle (1), the control system comprising one or more controllers (13), the control system (10) configured to:
receive an indication of current vehicle speed;
monitor a time period since vehicle launch; and
limit a maximum steering rate of a steering system of the vehicle (1) in dependence on the current vehicle speed and a period of time since launch,
**characterised in that** the one or more controller (13) is configured to, following the expiry of a predetermined time period following launch of the vehicle (1), limit a maximum steering rate of a steering system of the vehicle (1) to a first steering rate limit while the vehicle (1) is travelling below a predetermined speed threshold, and to not limit the maximum steering rate to the first steering rate while the vehicle (1) is travelling above the predetermined speed threshold.

2. The control system (10) of claim 1, wherein the one or more controllers (13) collectively comprise:
at least one electronic processor having an electrical input for receiving the indication of current vehicle speed; and
at least one memory device electrically coupled to the at least one electronic processor and having instructions stored therein;
and wherein the at least one electronic processor is configured to monitor a time period since vehicle launch, and limit a maximum steering rate of a steering system of the vehicle in dependence on the current vehicle speed and a period of time since launch.

3. The control system (10) of claim 1 or claim 2, wherein during the predetermined time period following launch of the vehicle, a second steering rate limit which is higher than the first steering rate limit is applied.

4. The control system (10) of claim 1 or claim 2, wherein during the predetermined time period following launch of the vehicle, no steering rate limit is applied.

5. The control system (10) of any preceding claim, wherein the predetermined time period is between 1 second and 5 seconds, and preferably approximately 2 seconds.

6. The control system (10) of any preceding claim, wherein the first steering rate limit is between 10mm/s and 15mm/s.

7. The control system (10) of claim 3, wherein the second steering rate is between 20mm/s and 30mm/s.

8. The control system (10) of any preceding claim, wherein a maximum steering rate below the predetermined vehicle speed is dependent on a current driving mode of the vehicle.

9. The control system (10) of any preceding claim, wherein the steering system is a rear wheel steering system of the vehicle.

10. A vehicle (1) comprising a steering system and a control system (10) according to any preceding claim.

11. The vehicle (1) according to claim 10, wherein the steering system is a rear wheel steering system, the vehicle further comprising a front wheel steering system, wherein the control system (10) is configured to limit the maximum steering rate of the rear wheel steering system in dependent on vehicle speed and time since launch, but not to so limit the front wheel steering system.

12. A control method for steering a vehicle, the method comprising:
receiving an indication of current vehicle speed (S2);
monitoring a time period since vehicle launch (S5); and
limiting a maximum steering rate (S8) of a steering system of the vehicle in dependence on the current vehicle speed (S2) and a period of time since launch (S5),
**characterised in that** following the expiry of a predetermined time period following launch of the vehicle (S6), a maximum steering rate of a steering system of the vehicle is limited (S8) to a first steering rate limit while the vehicle is travelling below a predetermined speed threshold (S3), and is not limited to the first steering rate (S7) while the vehicle is travelling above the predetermined speed threshold (S3).

13. Computer software that, when executed by the control system of claim 10, is arranged to perform a method according to claim 12.

## Patentansprüche

1. Steuerungssystem (10) für ein Fahrzeug (1), das Steuerungssystem umfassend eine oder mehrere Steuerungen (13), wobei das Steuerungssystem (10) konfiguriert ist, um:
eine Anzeige aktueller Fahrzeuggeschwindigkeit zu empfangen;
einen Zeitraum seit Fahrzeugstart zu überwachen; und
eine maximale Lenkrate eines Lenksystems des Fahrzeugs (1) in Abhängigkeit von der aktuellen Fahrzeuggeschwindigkeit und einer Zeitspanne seit dem Start zu begrenzen, **dadurch gekennzeichnet, dass** die eine oder mehreren Steuerungen (13) konfiguriert sind, um nach Ablauf einer vorbestimmten Zeitspanne nach dem Start des Fahrzeugs (1) eine maximale Lenkrate eines Lenksystems des Fahrzeugs (1) auf eine erste Lenkratengrenze zu begrenzen, während das Fahrzeug (1) unterhalb einer vorbestimmten Geschwindigkeitsschwelle fährt, und die maximale Lenkrate nicht auf die erste Lenkrate zu begrenzen, während das Fahrzeug (1) oberhalb der vorbestimmten Geschwindigkeitsschwelle fährt.

2. Steuerungssystem (10) nach Anspruch 1, wobei die eine oder die mehreren Steuerungen (13) zusammen umfasst/umfassen:
mindestens einen elektronischen Prozessor, der einen elektrischen Eingang zum Empfangen der Angabe aktueller Fahrzeuggeschwindigkeit aufweist; und
mindestens eine Speichervorrichtung, die mit dem mindestens einen elektronischen Prozessor elektrisch gekoppelt ist und darin gespeicherte Anweisungen aufweist;
und wobei der mindestens eine elektronische Prozessor konfiguriert ist, um eine Zeitspanne seit dem Fahrzeugstart zu überwachen und eine maximale Lenkrate eines Lenksystems des Fahrzeugs in Abhängigkeit von der aktuellen Fahrzeuggeschwindigkeit und einer Zeitspanne seit dem Start zu begrenzen.

3. Steuerungssystem (10) nach Anspruch 1 oder Anspruch 2, wobei während der vorbestimmten Zeitspanne nach dem Start des Fahrzeugs eine zweite Lenkratengrenze, die höher ist als die erste Lenkratengrenze, angewendet wird.

4. Steuerungssystem (10) nach Anspruch 1 oder Anspruch 2, wobei während der vorbestimmten Zeitspanne nach dem Start des Fahrzeugs keine Lenkratengrenze angewendet wird.

5. Steuerungssystem (10) nach einem der vorstehenden Ansprüche, wobei die vorbestimmte Zeitspanne zwischen 1 Sekunde und 5 Sekunden liegt und vorzugsweise etwa 2 Sekunden beträgt.

6. Steuerungssystem (10) nach einem der vorstehenden Ansprüche, wobei die erste Lenkratengrenze zwischen 10 mm/s und 15 mm/s liegt.

7. Steuerungssystem (10) nach Anspruch 3, wobei die zweite Lenkrate zwischen 20 mm/s und 30 mm/s liegt.

8. Steuerungssystem (10) nach einem der vorstehenden Ansprüche, wobei eine maximale Lenkrate unterhalb der vorbestimmten Fahrzeuggeschwindigkeit von einem aktuellen Fahrmodus des Fahrzeugs abhängig ist.

9. Steuerungssystem (10) nach einem der vorstehenden Ansprüche, wobei das Lenksystem ein Hinterradlenksystem des Fahrzeugs ist.

10. Fahrzeug (1), umfassend ein Lenksystem und ein Steuerungssystem (10) nach einem der vorstehenden Ansprüche.

11. Fahrzeug (1) nach Anspruch 10, wobei das Lenksystem ein Hinterradlenksystem ist, wobei das Fahrzeug ferner ein Vorderradlenksystem umfasst, wobei das Steuerungssystem (10) konfiguriert ist, um die maximale Lenkrate des Hinterradlenksystems in Abhängigkeit von der Fahrzeuggeschwindigkeit und der Zeit seit dem Start zu begrenzen, aber das Vorderradlenksystem nicht so zu begrenzen.

12. Steuerungsverfahren zum Lenken eines Fahrzeugs, das Verfahren umfassend:
Empfangen einer Anzeige aktueller Fahrzeuggeschwindigkeit (S2);
Überwachen eines Zeitraums seit Fahrzeugstart (S5); und
Begrenzen einer maximalen Lenkrate (S8) eines Lenksystems des Fahrzeugs in Abhängigkeit von der aktuellen Fahrzeuggeschwindigkeit (S2) und einer Zeitspanne seit dem Start (S5), **dadurch gekennzeichnet, dass** nach Ablauf einer vorbestimmten Zeitspanne nach dem Start des Fahrzeugs (S6) eine maximale Lenkrate eines Lenksystems des Fahrzeugs auf eine erste Lenkratengrenze begrenzt wird (S8), während das Fahrzeug unterhalb einer vorbestimmten Geschwindigkeitsschwelle (S3) fährt, und nicht auf die erste Lenkrate (S7) beschränkt ist, während das Fahrzeug oberhalb der vorbestimmten Geschwindigkeitsschwelle (S3) fährt.

13. Computersoftware, die, wenn sie durch das Steuerungssystem nach Anspruch 10 ausgeführt wird, angeordnet ist, um ein Verfahren nach Anspruch 12 durchzuführen.

## Revendications

1. Système de commande (10) pour un véhicule (1), le système de commande comprenant un ou plusieurs dispositifs de commande (13), le système de commande (10) étant configuré pour :
recevoir une indication de vitesse actuelle de véhicule ;
surveiller une période de temps depuis le démarrage de véhicule ; et
limiter une vitesse de braquage maximale d'un système de direction de véhicule (1) en fonction de la vitesse actuelle de véhicule et d'une période de temps depuis le démarrage, **caractérisé en ce que** le ou les dispositifs de commande (13) sont configurés pour, à la suite de l'expiration d'une période de temps prédéterminée suivant le démarrage de véhicule (1), limiter une vitesse de braquage maximale d'un système de direction de véhicule (1) à une première limite de vitesse de braquage tandis que le véhicule (1) se déplace en dessous d'un seuil de vitesse prédéterminé, et de ne pas limiter la vitesse de braquage maximale à la première vitesse de braquage lorsque le véhicule (1) se déplace au-dessus du seuil de vitesse prédéterminé.

2. Système de commande (10) selon la revendication 1, dans lequel le ou les dispositifs de commande (13) comprennent collectivement :
au moins un processeur électronique ayant une entrée électrique pour recevoir l'indication d'une vitesse actuelle de véhicule ; et
au moins un dispositif de mémoire électronique couplé électriquement à l'au moins un processeur électronique et dans lequel sont stockées des instructions ;
et dans lequel l'au moins un processeur électronique est configuré pour surveiller une période de temps depuis le démarrage de véhicule, et limiter une vitesse de braquage maximale d'un système de direction de véhicule en fonction de la vitesse actuelle de véhicule et d'une période de temps depuis le démarrage.

3. Système de commande (10) selon la revendication 1 ou la revendication 2, dans lequel pendant la période de temps prédéterminée suivant le démarrage du véhicule, une seconde limite de vitesse de braquage qui est supérieure à la première limite de vitesse de braquage est appliquée.

4. Système de commande (10) selon la revendication 1 ou la revendication 2, dans lequel pendant la période de temps prédéterminée suivant le démarrage du véhicule, aucune limite de vitesse de braquage n'est appliquée.

5. Système de commande (10) selon l'une quelconque revendication précédente, dans lequel la période de temps prédéterminée est comprise entre 1 seconde et 5 secondes, et de préférence environ 2 secondes.

6. Système de commande (10) selon l'une quelconque revendication précédente, dans lequel la première limite de vitesse de braquage est comprise entre 10 mm/s et 15 mm/s.

7. Système de commande (10) selon la revendication 3, dans lequel la seconde vitesse de braquage est comprise entre 20 mm/s et 30 mm/s.

8. Système de commande (10) selon l'une quelconque revendication précédente, dans lequel une vitesse de braquage maximale inférieure à la vitesse de véhicule prédéterminée dépend d'un mode de conduite actuel du véhicule.

9. Système de commande (10) selon l'une quelconque revendication précédente, dans lequel le système de direction est un système de direction de roue arrière de véhicule.

10. Véhicule (1) comprenant un système de direction et un système de commande (10) selon l'une quelconque revendication précédente.

11. Véhicule (1) selon la revendication 10, dans lequel le système de direction est un système de direction de roue arrière, le véhicule comprenant en outre un système de direction de roue avant, dans lequel le système de commande (10) est configuré pour limiter la vitesse de braquage maximale du système de direction de roue arrière en fonction d'une vitesse de véhicule et d'un temps écoulé depuis le démarrage, mais pas pour limiter ainsi le système de direction de roue avant.

12. Procédé de commande pour la direction d'un véhicule, le procédé comprenant :
la réception d'une indication de vitesse actuelle de véhicule (S2) ;
la surveillance d'une période de temps depuis le démarrage de véhicule (S5) ; et
la limitation d'une vitesse de braquage maximale (S8) d'un système de direction du véhicule en fonction de la vitesse actuelle de véhicule (S2) et d'une période de temps depuis le démarrage (S5), **caractérisé en ce qu'à** la suite de l'expiration d'une période de temps prédéterminée suivant le démarrage du véhicule (S6), une vitesse de braquage maximale d'un système de direction de véhicule est limitée (S8) à une première limite de vitesse de braquage lorsque le véhicule se déplace en dessous d'un seuil de vitesse prédéterminé (S3), et n'est pas limitée à la première de braquage (S7) lorsque le véhicule se déplace au-dessus du seuil de vitesse prédéterminé (S3).

13. Logiciel informatique qui, lorsqu'il est exécuté par le système de commande selon la revendication 10, est conçu pour réaliser un procédé selon la revendication 12.
